# EUROPÄISCHE PATENTSCHRIFT

(11) **EP 2 735 424 B1**
(45) Veröffentlichungstag und Bekanntmachung des Hinweises auf die Patenterteilung: **09.09.2020**
(21) Anmeldenummer: 13005369.7
(22) Anmeldetag: 14.11.2013
(51) Int. Cl.: B29C 45/76, B29C 45/17

(54) **Bedieneinheit für eine Spritzgießmaschine**
Operating unit for an injection moulding machine
Unité de commande pour une machine de moulage par injection

(30) Priorität: 26.11.2012 AT 12402012
(43) Veröffentlichungstag der Anmeldung: 28.05.2014
(73) Patentinhaber: ENGEL AUSTRIA GmbH, 4311 Schwertberg (AT)
(72) Erfinder: Dimmler, Gerhard, 4641 Steinhaus (AT); Giessauf, Josef, 4320 Perg (AT); Hölzl, Rainer, 4284 Tragwein (AT); Kern, Albin, 4311 Schwertberg (AT); Mairhofer, Friedrich, 4331 Naarn im Machland (AT); Steinparzer, Helmut, 4400 Steyr (AT); Voggeneder, Johann, 4310 Mauthausen (AT); Wiesinger, Karl, 4501 Neuhofen/Krems (AT)
(74) Vertreter: Torggler & Hofinger Patentanwälte

(56) Entgegenhaltungen:
- EP-A1- 1 902 827
- US-A- 5 470 218
- US-A1- 2004 088 066
- US-A1- 2004 093 115
- US-A1- 2006 247 821

## Beschreibung

Die vorliegende Erfindung betrifft eine Bedieneinheit für eine Spritzgießmaschine mit den Merkmalen des Oberbegriffs des Anspruchs 1 sowie eine Spritzgießmaschine mit einer derartigen Bedieneinheit.

Seit einiger Zeit ist es Standart, die Bedieneinheiten von Spritzgießmaschinen mit berührungsempfindlichen Bildschirmen auszustatten. Als Beispiel sei die anmeldereigene, nicht vorveröffentlichte österreichische Patentanmeldung mit dem Aktenzeichen A 851/2011 genannt. Die Bedienung mithilfe eines berührungsempfindlichen Bildschirms bietet zwar offensichtliche Vorteile, die in der obigen Patentanmeldung veröffentlichte Ausführung ist jedoch verbesserungswürdig. Da der Platz auf dem berührungsempfindlichen Bildschirm limitiert ist, sind bei der oben genannten Anmeldung die Tasten für die Menüsteuerung außerhalb des Bildschirms separat angeordnet. Eine flüssige Bedienung wird dadurch erschwert, da ja immer nach dem richtigen Knopf gesucht werden muss und der Bediener nicht intuitiv zu seinem Ziel geleitet wird, wie dies bei der Menüführung mithilfe eines Touch-Displays möglich wäre. Die naheliegende Maßnahme, die Knöpfe für die Menüführung einfach auf dem berührungsempfindlichen Bildschirm zu integrieren ist nicht zielführend, da aus Platzgründen eine hohe Fehleranfälligkeit entstehen würde.

In der US 5,470,218 A1 sind Bedienfelder, mittels welcher Aktionen einer Blasformmaschine auslösbar sind, auf einem berührungsempfindlichen Bildschirm dargestellt. Um eine Fehlbedienung unwahrscheinlicher zu machen, sind die Bedienfelder sehr groß ausgeführt. Dies ist nachteilig, weil dadurch viel wertvoller Platz auf dem berührungsempfindlichen Bildschirm verwendet wird.

Aufgabe der Erfindung ist es, eine Bedieneinheit für eine Spritzgießmaschine bereitzustellen, die eine flüssige und vor allem fehlerfreie Bedienung der Spritzgießmaschine erlaubt.

Diese Aufgabe wird durch eine Bedieneinheit mit den Merkmalen des Anspruchs 1 gelöst.

Dies geschieht indem Gruppen von Bedienfeldern, deren Betätigung von der Steuer- oder Regeleinrichtung an Spritzgießmaschinenelemente abgesendete Bediensignale auslösen, so angeordnet werden, dass sich passive Bereiche zwischen ihnen befinden, wobei in den passiven Bereichen Informationen über die Spritzgießmaschine dargestellt werden. Auf diese Weise wird vermieden, dass durch unabsichtliches Betätigen von Bedienfeldern ungewollte Aktivitäten der Spritzgießmaschine ausgelöst werden.

Weitere vorteilhafte Ausführungsformen der Erfindung sind in den abhängigen Ansprüchen definiert.

Für eine optimale Platzausnutzung kann es vorgesehen sein, dass in dem wenigstens einen passiven Feld Informationen über die Spritzgießmaschine darstellbar sind.

Um einen guten Kompromiss zwischen Platzausnützung und Fehlervermeidung zu erreichen, kann vorgesehen sein, dass das wenigstens eine passive Feld, wenn es in Form einer Zeile ist, eine Höhe von minimal 0,5 cm, vorzugsweise minimal 1 cm, aufweist und/oder dass das wenigstens eine Feld, wenn es in Form einer Spalte ist, eine Breite von minimal 0,5 cm, vorzugsweise minimal 1 cm, aufweist.

Bevorzugt ist weiterhin eine Ausführungsform, bei der wenigstens ein Navigationsfeld auf wenigstens zwei verschiedenen Seiten des Bedienprogramms auf einer gleichen Position angeordnet ist, da dies der flüssigen Bedienung der Spritzgießmaschine zuträglich ist.

Schutz wird weiterhin begehrt für eine Spritzgießmaschine mit einer erfindungsgemäßen Bedieneinheit.

Weitere Vorteile und Einzelheiten der Erfindung ergeben sich anhand der Figuren sowie der dazugehörigen Figurenbeschreibung. Dabei zeigen
- Fig. 1: ein Beispiel für eine Spritzgießmaschine mit einer erfindungsgemäßen Bedieneinheit und
- Fig. 2: ein Beispiel für eine erfindungsgemäße Anordnung von Bediengruppen, Navigationsgruppen und passiven Feldern.

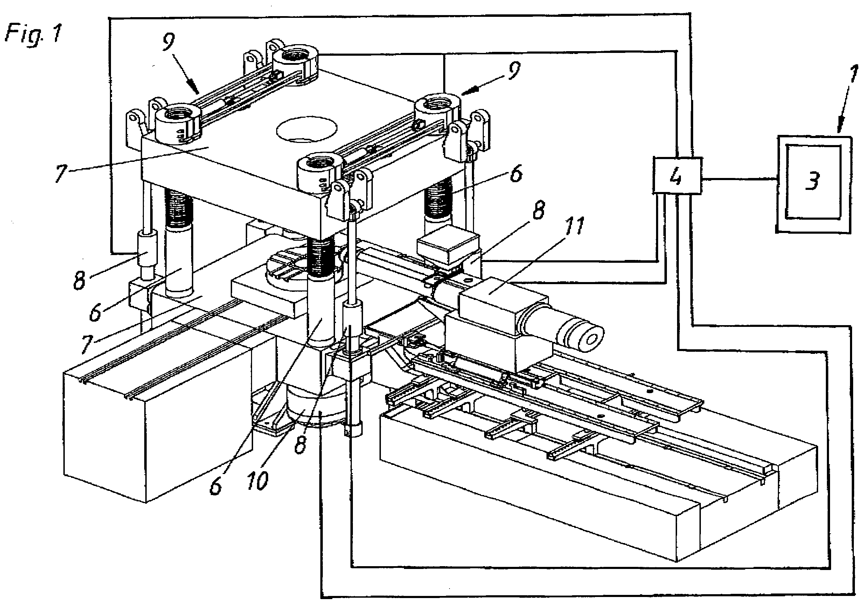

Fig. 1 zeigt eine Spritzgießmaschine mit Formaufspannplatten 7, Eilhüben 8, Holmen 6, Verriegelungsmechanismen 9, Druckmechanismen 10 sowie einer Einspritzeinheit 11. Schematisch dargestellt ist eine Bedieneinheit 1 mit einem berührungsempfindlichen Bildschirm 3 sowie einer mit der Bedieneinheit verbundenen Steuer- oder Regeleinrichtung 4, weiche selbst mit den oben genannten Elementen der Spritzgießmaschine verbunden ist.

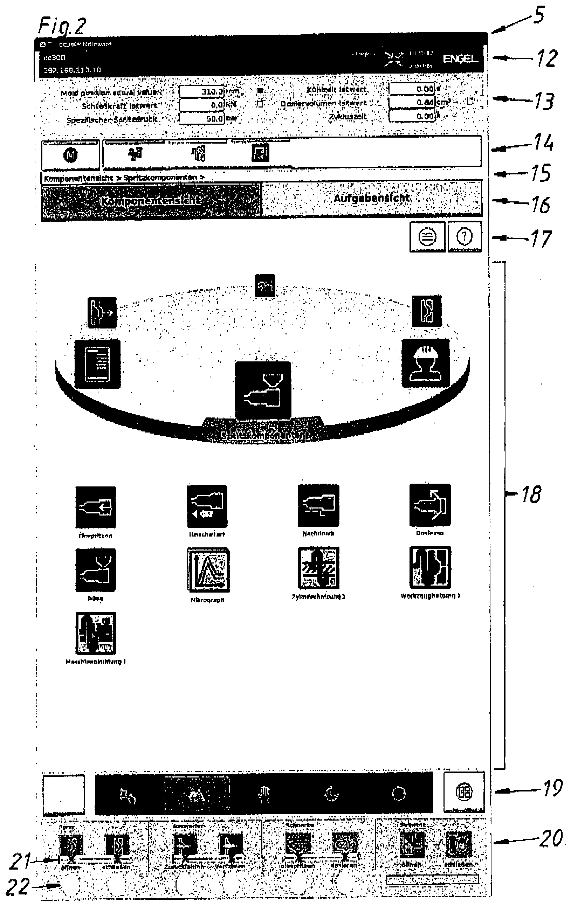

Fig. 2 zeigt ein Beispiel der erfindungsgemäßen Anordnung der Navigationsgruppen, der Bediengruppen sowie der passiven Bereiche. In dieser Ausführungsform ist eine Anordnung in Zeilen gewählt, was aber nicht essenziell ist, denn es kann genauso gut eine Spaltenanordnung oder eine Mischform gewählt werden. Zuoberst befindet sich die Status-/Alarmleiste 12. Mit ihrer Hilfe kann beispielsweise zu einer Alarmseite oder zu einer Seite zur Benutzeranmeldung navigiert werden. Darunter folgt ein passiver Bereich, der als Infopanel 13 ausgeführt ist, auf dem verschiedene Parameter der Spritzgießmaschine 2 und/oder Automatisierung (z.B. Handlingapparat) darstellbar sind. Im Anschluss daran ist die Antriebs- und Heizungsleiste 14 zu erkennen, über welche Dialoge zur Steuerung verschiedener Antriebe und Heizungen der Spritzgießmaschine 2 aufrufbar sind. Darunter befindet sich ein passiver Bereich, der als Pfadzeile 15 ausgebildet ist. Wiederum darunter schließt sich ein Block aus Titelleiste 16, Funktionsbereich 17, Arbeitsbereich 18, Betriebsmodusleiste 19 und Handtastenzuordnungsleiste 20 an.

Mit dem Funktionsbereich 17 können häufig benötigte Menüpunkte, wie Drucken und Hilfethemen erreicht werden. Im Arbeitsbereich 18 sind verschiedenste Seiten, etwa zur Einstellung verschiedenster Parameter der Spritzgießmaschine, darstellbar. Über die Betriebsmodusleiste 19 können verschiedene Betriebsmodi für die Spritzgießmaschine ausgewählt werden, wie etwa Automatikbetrieb, Einrichtmodus oder Lernmodus.

Die Handtastenleiste 22 ist wieder durch eine passive Statusinformationsleiste 21 von obigen aktiven Bereichen getrennt. Dabei zeigt die Statusinformationsleiste 21 Statusinformationen zu Aktivitäten von Spritzgießmaschinenelementen, welche mithilfe der Handtasten ggf. mit Haptik in der Handtastenleiste 22 auslösbar sind.

Zwar gibt es in diesem Ausführungsbeispiel lediglich eine Bediengruppe, nämlich die Handtastenleiste 22. Es ist jedoch ohne Weiteres denkbar mehrere Bediengruppen vorzusehen.

## Patentansprüche

1. Bedieneinheit für eine Spritzgießmaschine (2) mit einem Bedienprogramm und einem berührungsempfindlichen Bildschirm (3), auf dem Bedienfelder und Navigationsfelder darstellbar sind, wobei bei Betätigung der Bedienfelder Bediensignale von einer Steuer- oder Regeleinrichtung (4) an Spritzgießmaschinenelemente (8, 9, 10, 11) versendbar sind und bei Betätigung der Navigationsfelder Seiten des Bedienprogramms aufrufbar sind und wobei wenigstens eine Bediengruppe (22), die Bedienfelder aber keine Navigationsfelder beinhaltet, und Navigationsgruppen (12, 14, 16, 17, 18, 19, 20), die Navigationsfelder aber keine Bedienfelder beinhalten, und wenigstens ein passives Feld (13, 15, 21) in Form von Zeilen und/oder Spalten, welches weder Bedienfelder noch Navigationsfelder beinhaltet, vorgesehen sind und wobei die wenigstens eine Bediengruppe (22) und die Navigationsgruppen (12, 14, 16, 17, 18, 19, 20) in Zeilen und/oder Spalten angeordnet sind, **dadurch gekennzeichnet, dass** das wenigstens eine passive Feld (13, 15, 21) zwischen den Bedienfeldern der wenigstens einen Bediengruppe (22) angeordnet ist und in dem wenigstens einen passiven Feld (13, 15, 21) Informationen über die Spritzgießmaschine (2) darstellbar sind.

2. Bedieneinheit nach Anspruch 1, **dadurch gekennzeichnet, dass** das wenigstens eine passive Feld (13, 15, 21), wenn es in Form einer Zeile ist, eine Höhe von minimal 0,5 cm, vorzugsweise minimal 1 cm, aufweist und/oder dass das wenigstens eine Feld (13, 15, 21), wenn es in Form einer Spalte ist, eine Breite von minimal 0,5 cm, vorzugsweise minimal 1 cm, aufweist.

3. Bedieneinheit nach Anspruch 1 oder 2, **dadurch gekennzeichnet, dass** wenigstens ein Navigationsfeld auf wenigstens zwei verschiedenen Seiten des Bedienprogramms auf einer gleichen Position angeordnet ist.

4. Spritzgießmaschine mit einer Bedieneinheit (1) nach wenigstens einem der Ansprüche 1 bis 3.

## Claims

1. An operating unit for an injection moulding machine (2) having an operating program and a touch-sensitive display screen (3), on which operating fields and navigation fields can be represented, wherein upon actuation of the operating fields operating signals can be sent by a control or regulating device (4) to injection molding machine elements (8, 9, 10, 11) and upon actuation of the navigation fields pages of the operating program can be called up, and wherein at least one operating group (22) contains operating fields but no navigation fields, and navigation groups (12, 14, 16, 17, 18, 19, 20) contain navigation fields but no operating fields, and/or there are provided at least one passive field (13, 15, 21) in the form of rows and/or columns which contains neither operating fields nor navigational fields, and wherein the at least one operating group (22) and the navigation groups (12, 14, 16, 17, 18, 19, 20) are arranged in rows and/or columns, **characterised in that** the at least one passive field (13, 15, 21) is arranged between the operating fields of the at least one operating group (22) and information about the injection molding machine (2) can be represented in the at least one passive field (13, 15, 21).

2. An operating unit as set forth in claim 1 **characterised in that** the at least one passive field (13, 15, 21), if it is in the form of a row, is of a height of a minimum of 0.5 cm, preferably a minimum of 1 cm, and/or the at least one field (13, 15, 21), if it is in the form of a column, is of a width of a minimum of 0.5 cm, preferably a minimum of 1 cm.

3. An operating unit as set forth in claim 1 or 2 **characterised in that** at least one navigation field is arranged on at least two different pages of the operating program on the same position.

4. An injection molding machine having an operating unit (1) as set forth in at least one of claims 1 through 3.

## Revendications

1. Unité de commande pour une machine de moulage par injection (2) dotée d'un programme de commande et d'un écran tactile (3) sur lequel des champs de commande et des champs de navigation peuvent être affichés, dans laquelle en cas d'actionnement des champs de commande des signaux de commande peuvent être envoyés depuis une unité de contrôle ou de régulation (4) à des éléments de machine de moulage par injection (8, 9, 10, 11) et en cas d'actionnement des champs de navigation des pages du programme de commande peuvent être appelées et dans laquelle sont prévus au moins un groupe de commande (22) contenant des champs de commande mais aucun champ de navigation et des groupes de navigation (12, 14, 16, 17, 18, 19, 20) contenant des champs de navigation mais aucun champ de commande et au moins un champ passif (13, 15, 21) sous forme de lignes et/ou de colonnes, lequel ne contient ni champ de commande ni champ de navigation, et dans laquelle l'au moins un groupe de commande (22) et les groupes de navigation (12, 14, 16, 17, 18, 19, 20) sont agencés en lignes et/ou en colonnes, **caractérisée en ce que** l'au moins un champ passif (13, 15, 21) est agencé entre les champs de commande de l'au moins un groupe de commande (22) et des informations sur la machine de moulage par injection (2) peuvent être affichées dans l'au moins un champ passif (13, 15, 21).

2. Unité de commande selon la revendication 1, **caractérisée en ce que** l'au moins un champ passif (13, 15, 21), lorsqu'il est sous la forme d'une ligne, présente une hauteur de 0,5 cm minimum, de préférence 1 cm minimum et/ou **en ce que** l'au moins un champ passif (13, 15, 21), lorsqu'il est sous la forme d'une colonne, présente une largeur de 0,5 cm minimum, de préférence 1 cm minimum.

3. Unité de commande selon la revendication 1 ou 2, **caractérisée en ce qu'**au moins un champ de navigation est agencé sur une même position sur au moins deux côtés différents du programme de commande.

4. Machine de moulage par injection dotée d'une unité de commande (1) selon au moins une des revendications 1 à 3.
